# EUROPÄISCHE PATENTSCHRIFT

(11) **EP 0 690 113 B1**
(45) Veröffentlichungstag und Bekanntmachung des Hinweises auf die Patenterteilung: **04.11.1998**
(21) Anmeldenummer: 95890123.3
(22) Anmeldetag: 29.06.1995
(51) Int. Cl.: C09J 5/06, B27G 11/00

(54) **Verfahren zum Verkleben von Holz**
Process for adhering wood
Procédé de collage du bois

(30) Priorität: 01.07.1994 AT 1299/94
(43) Veröffentlichungstag der Anmeldung: 03.01.1996
(73) Patentinhaber: Lumacon Holztechnologie GmbH, 3335 Weyer (AT)
(72) Erfinder: Lumplecker, Josef, A-3335 Weyer (AT)
(74) Vertreter: Hübscher, Heiner, Dipl.-Ing.

(56) Entgegenhaltungen:
- EP-A- 0 339 494
- EP-A- 0 492 789
- DE-A- 1 653 326
- DE-A- 4 137 248
- GB-A- 2 109 384
- SHIELDS, J: "Adhesives Handbook" 1970 , BUTTERWORTH , LONDON XP002006111 * Seite 66 - Seite 67 * * Seite 262, Absatz 7.6.4 - Seite 263, Absatz 7.6.5 *

## Beschreibung

Die Erfindung bezieht sich auf ein Verfahren zum Verkleben von Holz, nach dem klebstoffbeschichtete Holzteile zusammengedrückt und während der Druckbelastung einem hochfrequenten Wechselspannungsfeld ausgesetzt werden.

Im Holzleimbau werden die verschiedensten Klebstoffe eingesetzt, wobei bisher meist PVAc (Polyvinylacetat)-, Harnstoff-, Harnstoff-Melamin- oder Resorcin-Klebstoffe Verwendung finden, die durch Beimischung von Härtern kürzere Abbinde- und Aushärtzeiten mit sich bringen. In diesem Zusammenhang ist es bekannt, die miteinander zu verbindenden Holzteile nach dem Klebstoffbeschichten während des Pressens in einer Preßvorrichtung einem hochfrequenten Wechselspannungsfeld auszusetzen, wobei Frequenzen von 13,56 MHZ und Spannungen von 200 V erreicht werden. Durch dieses Wechselspannungsfeld kommt es zu einer Aktivierung der im Härter enthaltenen lonen, die Reibungswärme erzeugen und damit die Aushärtung des Klebstoffes beschleunigen (Shields, J: "Adhesives Handbook" 1970, Butterworth, London XP002006111, Seite 262).

Eine solche Wärmeaushärtung mit Hilfe eines elektromagnetischen Wechselfeldes ist beispielsweise für einen Klebstoff aus einer Urethanverbindung auf der Basis eines Epoxidharzes bekannt (GB 2 109 384 A). Die dielektrische Erwärmung des Klebstoffes wird zu einer Beschleunigung der Aushärtung eingesetzt, die auf einer Wärmereaktion des Härters beruht. Der Einsatz von Schmelzklebern, die mit Hilfe eines hochfrequenten Wechselspannungsfeldes ausgehärtet werden, über das die Wärmereaktion des Härters beschleunigt wird, ist vielfältig. So ist es beispielsweise bekannt (DE 41 37 248 A1), solche Schmelzkleber zum Verbinden von zellulosehaltigen Werkstoffen, vorzugsweise Holz, Pappe oder Papier, vorzusehen. Es können aber auch faserverstärkte Kunststoffe mit anderen Werkstoffen über solche Schmelzkleber verbunden werden, die unter Anwendung einer dielektrischen Erwärmung ausgehärtet werden (EP 0 339 494). Die Wechselspannungsfelder werden im allgemeinen zwischen Elektrodenplatten aufgebaut, die die miteinander zu verbindenden Teile zwischen sich aufnehmen und an die die hochfrequente Wechselspannung angelegt wird. Ist einer der zu verklebenden Teile elektrisch leitend, so kann dieser elektrisch leitende Teil als eine der beiden Elektroden verwendet werden (EP 0 492 789 A1).

PUR-Klebstoffe werden ebenfalls bereits im Holzleimbau eingesetzt. Diese Klebstoffe benötigen zwar keine Härter, sie bringen aber auch längere Aushärtzeiten mit sich, beispielsweise sind bei 20 °C Raumtemperatur und einer Holzfeuchtigkeit von 10 - 15 % eine offene Anhärtzeit von einer Stunde, eine Aushärtzeit während der Druckbelastung in der Presse von 3 Stunden und eine Nachlagerzeit von 48 Stunden in Kauf zu nehmen. Durch das Fehlen eines Härters gibt es in den PUR-Klebstoffen keine Metallionen, so daß nach dem Urteil der Fachwelt auch der Einsatz von hochfrequenten Wechselspannungsfeldern keine Beschleunigung der Aushärtzeiten erwarten läßt und daher bei Einsatz von PUR-Klebstoffen mit entsprechend langen Aushärtzeiten zu rechnen ist.

Der Erfindung liegt demnach die Aufgabe zugrunde, diese Mängel zu beseitigen und ein Verfahren der eingangs geschilderten Art anzugeben, das ein rationelles Verkleben von Holz auch unter Verwendung härterfreier Klebstoffe mit kürzesten Aushärtzeiten gewährleistet.

Die Erfindung löst diese Aufgabe dadurch, daß ein PUR-Klebstoff verwendet wird und die mit dem PUR-Klebstoff beschichteten, zusammengedrückten Holzteile einem Wechselspannungsfeld von wenigstens 300 V, vorzugsweise 400V, ausgesetzt werden. Bei gezielten Versuchsreihen hat sich überraschend herausgestellt, daß auch härterfreie Klebstoffe, unter dem Einfluß von hochfrequenten Wechselspannungen entsprechender Stärke schneller abbinden und aushärten. Dies läßt sich dadurch erklären, daß durch die beschleunigte Erwärmung des PUR-Klebstoffes aufgrund der gesteigerten Wechselspannung auch eine Erwärmung der Holzrandzonen stattfindet, wodurch in Abhängigkeit der Holzfeuchtigkeit Wasserdampf entsteht und in die Klebeschicht eindringt, was zu einer besseren Vernetzung zwischen Holz und Klebstoff führt und, da PUR zur Aushärtung Feuchtigkeit benötigt, auch den Aushärtvorgang entsprechend begünstigt. Darüber hinaus wird durch die Erwärmung des Klebstoffes das Volumen der Klebstoffschicht vergrößert und der Klebstoff zu einem tieferen Eindringen in die Holzrandzonen gezwungen, so daß es zu wesentlich festeren Verklebungen kommt.

Eine weitere Verkürzung der Aushärtzeit ist dadurch zu erreichen, daß ein mit einem Katalysator versetzter PUR-Klebstoff verwendet wird, welcher Katalysator die Erwärmung des Klebstoffes von 40 bis 50 °C auf 90 °C beschleunigt und durch diese beschnleunigte Erwärmung den gesamten Aushärtevorgang verkürzt.

### Ausführungsbeispiel:

Holzteile, die mit PUR-Klebstoff Collano 110 beschichtet sind, werden 1 Stunde offen abbinden gelassen, dann während der Preßzeit 7 Minuten lang einem Wechselspannungsfeld von f = 13,56 MHZ und U = 400 V ausgesetzt und anschließend 2 Minuten nachhärten gelassen. Es entsteht eine ausgehärtete, hochfeste Klebeverbindung.

Wird ein PUR-Klebstoff mit Katalysator eingesetzt, entsteht die Klebeverbindung bereits bei sonst gleichen Abbinde- und Nachhärtzeiten nach einer 3 minütigen Wechselspannungsbelastung.

## Patentansprüche

1. Verfahren zum Verkleben von Holz, nach dem klebstoffbeschichtete Holzteile zusammengedrückt und während der Druckbelastung einem hochfrequenten Wechselspannungsfeld ausgesetzt werden, dadurch gekennzeichnet, daß ein PUR-Klebstoff verwendet wird und die mit dem PUR-Klebstoff beschichteten, zusammengedrückten Holzteile einem Wechselspannungsfeld von wenigstens 300 V ausgesetzt werden.

2. Verfahren nach Anspruch 1, dadurch gekennzeichnet, daß die mit dem PUR-Klebstoff beschichteten, zusammengedrückten Holzteile einem Wechselspannungsfeld von 400 V ausgesetzt werden.

3. Verfahren nach Anspruch 1 oder 2, dadurch gekennzeichnet, daß ein mit einem Katalysator versetzter PUR-Klebstoff verwendet wird.

## Claims

1. A method of sticking wood wherein wood parts coated with adhesive are compressed and while under pressure are subjected to a high-frequency AC voltage field, characterised in that a PUR adhesive is used and the compressed wood parts coated with PUR adhesive are subjected to an AC voltage field of at least 300 V.

2. A method according to claim 1, characterised in that the compressed wood parts coated with the PUR adhesive are subjected to an AC voltage field of 400 V.

3. A method according to claim 1 or 2, characterised by use of a PUR adhesive to which a catalyst has been added.

## Revendications

1. Procédé de collage de bois, selon lequel des pièces de bois revêtues d'adhésif sont comprimées ensemble et exposées à un champ de tension alternative à haute fréquence, pendant l'exposition à la pression, caractérisé en ce qu'est utilisé un adhésif PUR et les pièces de bois comprimées sous pression, revêtues de l'adhésif PUR, sont exposées à un champ de tension alternative d'au moins 300 V.

2. Procédé selon la revendication 1, caractérisé en ce que les pièces de bois comprimées sous pression, revêtues de l'adhésif PUR, sont exposées à un champ de tension alternative de 400 V.

3. Procédé selon la revendication 1 ou 2, caractérisé en ce qu'est utilisé un adhésif PUR réticulé avec un catalyseur.
